# EUROPÄISCHE PATENTSCHRIFT

(11) **EP 2 596 265 B1**
(45) Veröffentlichungstag und Bekanntmachung des Hinweises auf die Patenterteilung: **02.09.2020**
(21) Anmeldenummer: 11733792.3
(22) Anmeldetag: 04.07.2011
(51) Int. Cl.: F16D 65/14

(54) **UNTERBAUGRUPPE FÜR EINEN ELEKTROMECHANISCHEN BREMSAKTUATOR**
SUB-ASSEMBLY FOR AN ELECTROMECHANICAL BRAKE ACTUATOR
SOUS-ENSEMBLE POUR UN ACTIONNEUR DE FREIN ÉLECTROMÉCANIQUE

(30) Priorität: 23.07.2010 DE 102010032053
(43) Veröffentlichungstag der Anmeldung: 29.05.2013
(73) Patentinhaber: Lucas Automotive GmbH, 56070 Koblenz (DE); Oechsler AG, 91522 Ansbach (DE)
(72) Erfinder: DETTENBERGER, Stefan, 91522 Ansbach (DE); POERTZGEN, Gregor, 56068 Koblenz (DE)
(86) Internationale Anmeldenummer: PCT/EP2011/003314
(87) Internationale Veröffentlichungsnummer: WO 2012/010256

(56) Entgegenhaltungen:
- WO-A1-2006/094804
- DE-A1-102006 040 129
- US-A1- 2004 162 181
- US-A1- 2007 213 171

## Beschreibung

### Technisches Gebiet

Die vorliegende Erfindung betrifft das Gebiet der Kraftfahrzeugbremsen. Genauer gesagt betrifft die Erfindung einen verbesserten Aufbau einer Unterbaugruppe eines Bremsaktuators, der für eine elektromechanisch betriebene Parkbremse oder eine elektromechanisch betriebene Betriebsbremse vorgesehen ist.

### Hintergrund

Elektrisch betriebene Parkbremsen (EPB) ersetzen immer öfter herkömmliche Parkbremsen, welche über Seilzüge eine vom Fahrer aufgebrachte Kraft in eine Zuspannkraft an Radbremsen des Fahrzeugs wandeln. Der Vorteil elektrischer Parkbremsen liegt in ihrer Ansteuerbarkeit durch moderne Bordelektronik. Dadurch eröffnen sich neue Anwendungsmöglichkeiten für die Parkbremse, wie beispielsweise die Realisierung einer Berganfahrhilfe (Hill Hold-Funktion).

Eine elektrisch betriebene Parkbremse umfasst in der Regel einen elektromechanischen Bremsaktuator, der über einen mechanisch verschiebbaren Bremskolben eine Zuspannkraft an den Radbremsen ausübt. Der Bremsaktuator ist im Wesentlichen durch eine Unterbaugruppe aus Motor- und Getriebeeinrichtungen definiert, die in einem Gehäuse dämpfend gelagert ist und im Inneren eines Fahrzeugrades untergebracht ist.

Eine besondere Herausforderung besteht nun darin, einen leistungsstarken, verschleißarmen und gleichzeitig räumlich kompakten elektromechanischen Bremsaktuator zu konstruieren, um Gewicht und Platz zu sparen. Zur Steigerung der Leistungsfähigkeit wird dabei häufig ein mehrstufiges Getriebe eingesetzt, um eine starke Untersetzung der vom Elektromotor erzeugten Rotationsbewegung zu erreichen (ein typischer Untersetzungswert ist 120:1). Mit steigender Komplexität des Getriebes steigt allerdings das Verschleißpotenzial des Bremsaktuators, wodurch wiederum die Lebensdauer des Bremsaktuators beeinträchtigt wird.

Aus der Patentanmeldung DE 10 2004 048 700 A1 ist ein elektromechanischer Bremsaktuator bekannt, welcher einen Elektromotor und eine dreistufige Getriebeeinrichtung aufweist. Die Getriebeeinrichtung umfasst zwei aufeinanderfolgende Zahnradgetriebestufen, denen abtriebsseitig eine Planetengetriebestufe nachgeschaltet ist. Ferner sind zwei an einem Trägerelement einseitig gelagerte Getriebeachsen für die Lagerung der beiden Zahnradgetriebestufen und eines Sonnenrads der Planetengetriebestufe vorgesehen.

Aus DE 10 2006 040129 A1 ist ein elektromechanischer Bremsaktuator mit einer Getriebeanordnung bekannt, welche eine Zahnradgetriebestufe und eine mit der Zahnradgetriebestufe gekoppelten Planetengetriebestufe umfasst. Insgesamt umfasst die Getriebeanordnung des Aktuators drei Getriebestufen, wobei das abtriebsseitige Zahnrad der Zahnradgetriebestufe mit dem Sonnenrad der Planetengetriebestufe gekoppelt ist und wobei Sonnenrad und abtriebsseitiges Zahnrad der Zahnradgetriebestufe einseitig gelagert sind.

Die Ausführung und stabile mechanische Lagerung der Getriebekomponenten ist entscheidend, um einerseits das Volumen des Bremsaktuators zu reduzieren und andererseits seine Lebensdauer zu verlängern. Beispielsweise kann eine unzulängliche Lagerung stark belasteter Getriebekomponenten den Verschleiß im Getriebe verstärken, wodurch Lebensdauer und Wirkungsgrad des Bremsaktuators abnehmen.

### Kurzer Abriss

Der Erfindung liegt die Aufgabe zugrunde, einen verbesserten Aufbau für einen elektromechanischen Bremsaktuator anzugeben, welcher bezüglich der Lagerung der Getriebekomponenten und des Bauraums optimiert ist.

Hierfür wird eine Unterbaugruppe für einen elektromechanischen Bremsaktuator bereitgestellt, welche eine Antriebseinrichtung zur Erzeugung eines Drehmoments und eine Getriebeeinrichtung zur Übertragung des Drehmoments umfasst. Die Getriebeeinrichtung umfasst hintereinander eine erste, zweite und dritte Getriebestufe, wobei die zweite Getriebestufe als Zahnradgetriebe und die dritte Getriebestufe als Planetengetriebe ausgebildet ist und wobei ein Planetenradträger der dritten Getriebestufe eine erste Getriebeachse zur drehbaren Aufnahme eines Sonnenrads der dritten Getriebestufe und eines mit dem Sonnenrad drehfest gekoppelten abtriebsseitigen Zahnrads der zweiten Getriebestufe am Planetenradträger, sowie Lagerelemente für Planetenräder der dritten Getriebestufe aufnimmt.

Gemäß einer ersten Ausführung kann die erste Getriebestufe als Zahnradgetriebe ausgebildet sein. Hierbei kann ein abtriebsseitiges Zahnrad der ersten Getriebestufe in kämmendem Eingriff mit einem antriebsseitigen Zahnrad stehen, welches an einer Antriebswelle der Antriebseinrichtung montiert ist. In einer alternativen Ausführung kann die erste Getriebestufe als Riemengetriebe ausgebildet sein, wobei die Drehmomentübertragung durch einen Zahnriemen erfolgt, welcher zwischen einem antriebsseitigen Riemenrad an der Antriebswelle und einem abtriebsseitigen Riemenrad der ersten Getriebestufe eingespannt ist.

Das abtriebsseitige Zahnrad oder Riemenrad der ersten Getriebestufe kann zu einem antriebsseitigen Zahnrad der zweiten Getriebestufe konzentrisch angeordnet und mit diesem drehfest verbunden sein. Gemäß einer weiteren Ausführung kann das abtriebsseitige Zahnrad oder Riemenrad der ersten Getriebestufe mit dem antriebsseitigen Zahnrad der zweiten Getriebestufe einstückig ausgebildet sein. Das antriebsseitige Zahnrad der zweiten Getriebestufe kann seinerseits mit einem abtriebsseitigen Zahnrad der zweiten Getriebestufe in kämmendem Eingriff stehen. Alternativ hierzu kann das antriebsseitige Zahnrad der zweiten Getriebestufe mit dem abtriebsseitigen Zahnrad der zweiten Getriebestufe über ein Zwischenrad gekoppelt sein.

Das abtriebsseitige Zahnrad der zweiten Getriebestufe kann mit einem Sonnenrad der als Planetengetriebe ausgebildeten dritten Getriebestufe drehfest verbunden sein. Das Sonnenrad kann konzentrisch zum abtriebsseitigen Zahnrad der zweiten Getriebestufe angeordnet sein. Alternativ hierzu kann das Sonnenrad mit dem abtriebsseitigen Zahnrad der zweiten Getriebestufe einstückig ausgebildet sein. Der Vorteil einer einstückigen Ausbildung liegt in einer Verringerung von Getriebekomponenten, wodurch die Montage erleichtert und die Lebensdauer der Unterbaugruppe erhöht wird.

Das Aufnehmen der ersten Getriebeachse durch den Planetenradträger kann drehfest oder drehbar erfolgen. So kann die erste Getriebeachse mit dem Planetenradträger drehfest verbunden sein. Der Planetenradträger und die erste Getriebeachse können einstückig oder zweistückig ausgebildet sein. In einer weiteren Ausführung kann die erste Getriebeachse am oder im Planetenradträger drehbar gelagert sein.

Der Planetenradträger kann scheibenförmig ausgebildet sein. Der scheibenförmige Planetenradträger kann auf einer Seite, an der die Lagerelemente für die Aufnahme der Planetenräder ausgebildet sind, die erste Getriebeachse mittig aufnehmen. Die am oder im Planetenradträger aufgenommene erste Getriebeachse kann sich entlang der Drehachse des Planetenradträgers in den Raum erstrecken. Durch die direkte Aufnahme der ersten Getriebeachse am Planetenradträger können das Sonnenrad und das damit drehfest verbundene abtriebsseitige Zahnrad der zweiten Getriebestufe einerseits und die Planetenräder andererseits am Planetenradträger aufliegen. Auf diese Weise können die Planetenräder und das Sonnenrad gemeinsam und in einer festen räumlichen Beziehung zueinander am Planetenradträger gelagert werden.

An der Rückseite des Planetenradträgers kann ein Abtriebselement zur Abgabe des Drehmoments drehmomentschlüssig angeordnet sein. Das abtriebsseitige Element kann zapfenförmig ausgebildet sein und konzentrisch zum Planetenradträger angeordnet sein. Gemäß einer Ausführung können das Abtriebselement, der Planetenradträger und die erste Getriebeachse einstückig ausgebildet sein.

Ferner kann die Unterbaugruppe ein Fixierelement umfassen, welches dafür vorgesehen ist, die Getriebeeinrichtung relativ zur Antriebseinrichtung räumlich anzuordnen. Gemäß einer alternativen Ausführung kann das Fixierelement als Trägerelement ausgebildet sein, an dem die Antriebseinrichtung und die Getriebeeinrichtung zu einer eigenständigen handhabbaren Unterbaugruppe zusammengefasst sind. Dadurch können alle Komponenten der Unterbaugruppe am Trägerelement räumlich zueinander angeordnet und daran befestigt werden. In einer Implementierung dieses Aspekts liegen keine Getriebekomponenten an einem Gehäuse des Bremsaktuators auf, wodurch die Montage, die Stabilität und der Wirkungsgrad der Unterbaugruppe verbessert werden.

Am Fixierelement können Komponenten der Getriebeeinrichtung ausgebildet sein. Beispielsweise können ein Hohlrad und/oder eine zweite Getriebeachse am oder im Fixierelement ausgebildet sein. In einer Ausführung können das Hohlrad und/oder die zweite Getriebeachse mit dem Fixierelement einstückig ausgebildet sein. Die Integration von Getriebekomponenten am Fixierelement führt zu einer Verringerungen der Zahl der zu montierenden Getriebekomponenten, wodurch nicht nur die Montage vereinfacht, sondern auch die Lebensdauer des Bremsaktuators erhöht wird. Durch Integration im Betrieb stark belasteter Getriebekomponenten, wie beispielsweise des Hohlrads des Planetengetriebes, werden mechanischen Verbindungen eliminiert, welche sich durch starke Belastung mit der Zeit lösen können.

Durch geeignete Ausgestaltung des Fixierelements kann ferner der Bauraum der Unterbaugruppe optimiert werden. In einer Ausführung kann das Fixierelement stufenförmig aufgebaut sein, wobei das an einem ersten Ende des Fixierelements ausgebildete Hohlrad zu einem am zweiten Ende des Fixierelements zylinderförmig definierten Aufnahmeraum abgesenkt ist. Dadurch können die abtriebsseitigen Getriebekomponenten in axialer Richtung relativ zur Antriebseinrichtung verschoben werden, wodurch die Abmessung der Unterbaugruppe in axialer Richtung reduziert wird.

Ferner kann die Unterbaugruppe ein Zentrierelement umfassen. Das Zentrierelement kann am Fixierelement befestigbar sein. Das Zentrierelement kann derart ausgebildet sein, dass es zusammen mit dem Fixierelement einen käfigartigen Aufnahmeraum definiert, in welchem Getriebekomponenten der Getriebeeinrichtung schützend aufgenommen sind.

Das Zentrierelement kann ferner Lager umfassen, welche für die Lagerung der ersten und zweiten Getriebeachse am Zentrierelement vorgesehen sind. Auch können beide Getriebeachsen beidseitig (drehbar oder drehfest) aufgenommen werden, wobei die erste Getriebeachse an ihrem ersten Ende am Zentrierelement und an ihrem zweiten Ende am Planetenradträger aufgenommen ist und die zweite Getriebeachse an ihrem ersten Ende am Fixierelement und an ihrem zweiten Ende am Zentrierelement aufgenommen ist. Eine beidseitige Aufnahme der Getriebeachsen hat den Vorteil, dass an den Getriebeachsen radial angreifende Kräfte verteilt werden, wodurch Deformationen der Getriebeachsen in axialer Richtung verhindert werden.

Der Bremsaktuator kann ferner ein Halteelement umfassen, welches dafür vorgesehen ist, den Planetenradträger mit den darauf aufliegenden Planetenrädern im Hohlrad drehbar zu lagern. Das Haltelement kann als einfacher Ring ausgebildet sein, welcher passgenau an der Unterseite des Hohlrads befestigbar ist. Auf diese Weise kann ein Herausfallen des Planetenradträgers vom Hohlrad verhindert werden.

Die Erfindung stellt ferner einen elektromechanischen Bremsaktuator bereit, welcher die oben beschriebene Unterbaugruppe, ein Gehäuse und mindestens zwei Dämpfungselemente umfasst, wobei die mindestens zwei Dämpfungselemente zwischen der Unterbaugruppe und dem Gehäuse zur dämpfenden Lagerung der Unterbaugruppe im Gehäuse angeordnet sind.

Die mindestens zwei Dämpfungselemente können an einem Fixierelement der Unterbaugruppe montiert werden, wobei die Unterbaugruppe über die Dämpfungselemente an einem Gehäuseunterteil des Gehäuses aufliegt. Die Dämpfungselemente können blockförmig, ringförmig, O-Ring-förmig, L- bzw. T-förmig ausgebildet sein. Die Dämpfungselemente können aus elastomeren Material mit unterschiedlichen Feder- und Dämpfungskonstanten ausgebildet sein. Ferner kann eine Antriebseinrichtung der Unterbaugruppe separat gegenüber dem Gehäuseunterteil gedämpft werden.

Die Erfindung betrifft ferner eine elektrische Parkbremse, welche den elektromechanischen Bremsaktuator oder die Unterbaugruppe der vorliegenden Erfindung umfasst sowie einen nachgeschalteten Rotations-Translations-Umsetzer zur Umwandlung der vom Bremsaktuator erzeugten Rotationsbewegung in eine Linearbewegung.

### Beschreibung der Zeichnungen

Weitere Einzelheiten, Vorteile und Aspekte der hier beschriebenen Unterbaugruppe für einen elektromechanischen Bremsaktuator ergeben sich aus den nachfolgenden Zeichnungen. Es zeigen:
- Fig. 1: eine perspektivische Darstellung eines Ausführungsbeispiels eines elektromechanischen Bremsaktuators;
- Fig. 2: eine Schnittansicht der Baugruppe des elektromechanischen Bremsaktuators gemäß Fig. 1;
- Fig. 3: eine perspektivische Darstellung einer montierten Getriebeeinrichtung einer Unterbaugruppe des elektromechanischen Bremsaktuators gemäß Fig. 1; und
- Fig. 4: eine Explosionsdarstellung der Getriebeeinrichtung der Unterbaugruppe gemäß Fig. 2.

### Detaillierte Beschreibung

Im Folgenden wird ein Ausführungsbeispiel einer Unterbaugruppe eines elektromechanischen Bremsaktuators für eine elektrisch betriebene Parkbremse erläutert. Übereinstimmende Elemente in den Figuren sind dabei mit denselben Bezugszeichen bezeichnet. Angaben wie "Oberseite" und "Unterseite" bzw. "oberseitig" und "unterseitig" beziehen sich auf die in den Figuren dargestellte Ausrichtung der Baugruppe. Es versteht sich, dass die Unterbaugruppe innerhalb einer elektrischen Parkbremse in der Regel liegend eingebaut ist.

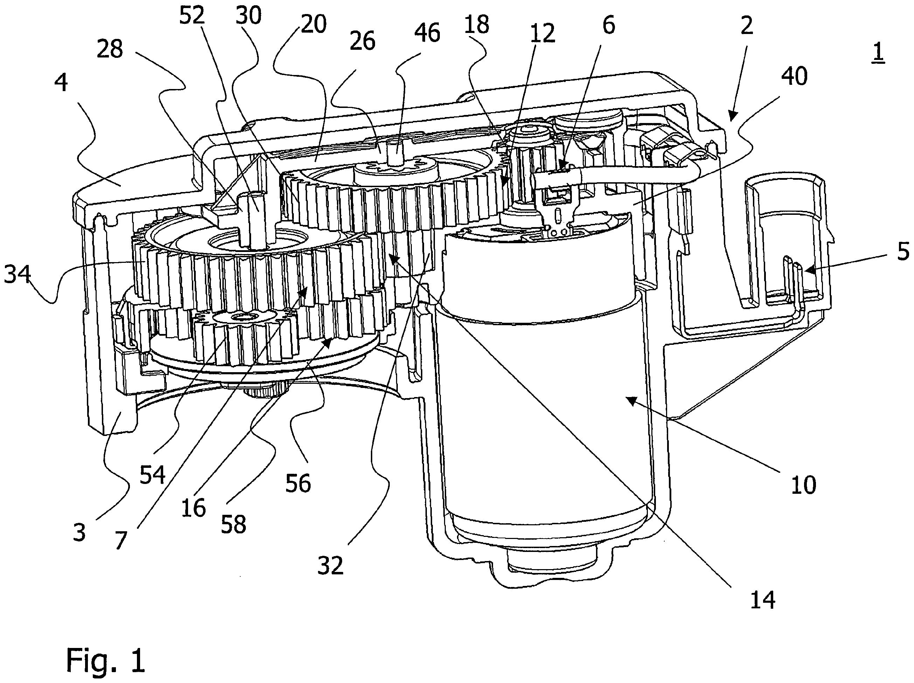

Fig. 1 zeigt in einer perspektivischen Darstellung wesentliche Bauteile eines Ausführungsbeispiels eines elektromechanischen Bremsaktuators 1. Der elektromechanische Bremsaktuator 1 weist eine Unterbaugruppe 6 auf, welche in einem schützenden Gehäuse 2 dämpfend gelagert ist. Die Unterbaugruppe 6 umfasst eine Antriebseinrichtung 10 mit einer Antriebswelle 11 und eine damit gekoppelte Getriebeeinrichtung 7. Die Getriebeeinrichtung 7 besitzt drei aufeinanderfolgende Stufen, wobei die erste und zweite Getriebestufe 12, 14 als Zahnradgetriebe ausgebildet sind und die dritte Getriebestufe 16 als einstufiges Planetengetriebe.

Das Gehäuse 2 ist zweiteilig mit einem Gehäuseunterteil 3 und einem Gehäuseoberteil 4 ausgebildet. Das Gehäuseunterteil 3 dient zur Aufnahme der Unterbaugruppe 6 und ist daher hinsichtlich seiner räumlichen Ausgestaltung an die Abmessungen der Unterbaugruppe 6 angepasst. So weist das Gehäuseunterteil 3 einen zylinderförmigen Hohlraum auf, in welchem ein Elektromotor der Antriebseinrichtung 10 aufgenommen ist. Ferner ist seitlich des zylinderförmigen Hohlraums ein elektrischer Steckverbinder 5 mit Kontaktstiften angeformt, um die Antriebseinrichtung 10 elektrisch zu versorgen und anzusteuern. Das Gehäuseoberteil 2 ist deckelförmig ausgebildet. Es erfüllt im vorliegenden Ausführungsbeispiel hauptsächlich eine Schutz- und Abdichtfunktion. Nach Einbau der Unterbaugruppe 6 in das Gehäuseunterteil 3 wird das Gehäuseunterteil 3 mit dem Gehäuseoberteil 4 verschweißt.

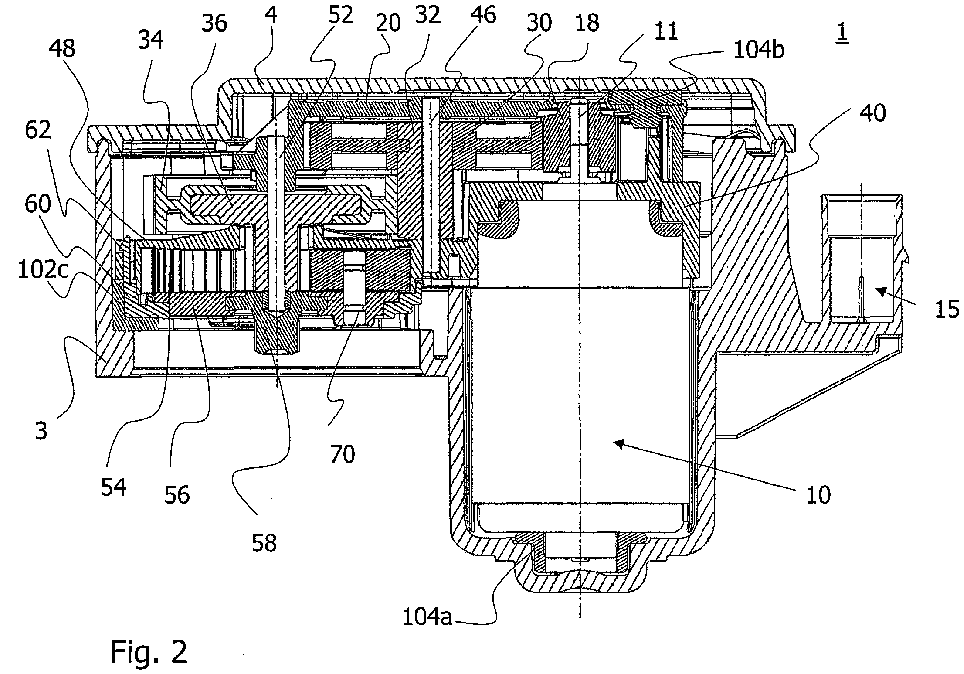

Die dämpfende Lagerung der Unterbaugruppe 6 im Gehäuse 2 ist in Fig. 2 deutlicher dargestellt. Die Lagerung der Unterbaugruppe 6 erfolgt über zwei oder mehrere Dämpfungselemente 100a-b, 102a-c, 104a-b. Hierbei ist der Elektromotor mittels eines zylindrischen Dämpfungselements 104a gegenüber dem Gehäuseunterteil 3 dämpfend gelagert. Gleichzeitig wird die Getriebeeinrichtung 7 über zwei an dem Fixierelement 40 angebrachte Dämpfungselemente 100a-b und über drei weitere an einem Halteelement 60 der Getriebeeinrichtung 7 angebrachte Dämpfungselemente 102a-c im Gehäuseunterteil 3 dämpfend gelagert. Drei weitere, stopfenförmig ausgebiledete Dämpfungselemente 104b sind dafür vorgesehen, das Zentrierelement 20 oberseitig gegenüber dem Gehäuseoberteil 4 dämpfend zu lagern. Jedes der Dämpfungselemente 100a-b, 102a-c, 104a-b ist aus einem elastomeren Kunststoff mit gegebener Feder- und Dämpfungskonstante aufgebaut und derart ausgeformt und dimensioniert, dass sie an den entsprechenden Auflagestellen im Gehäuse 2 die Unterbaugruppe 6 optimal dämpfen.

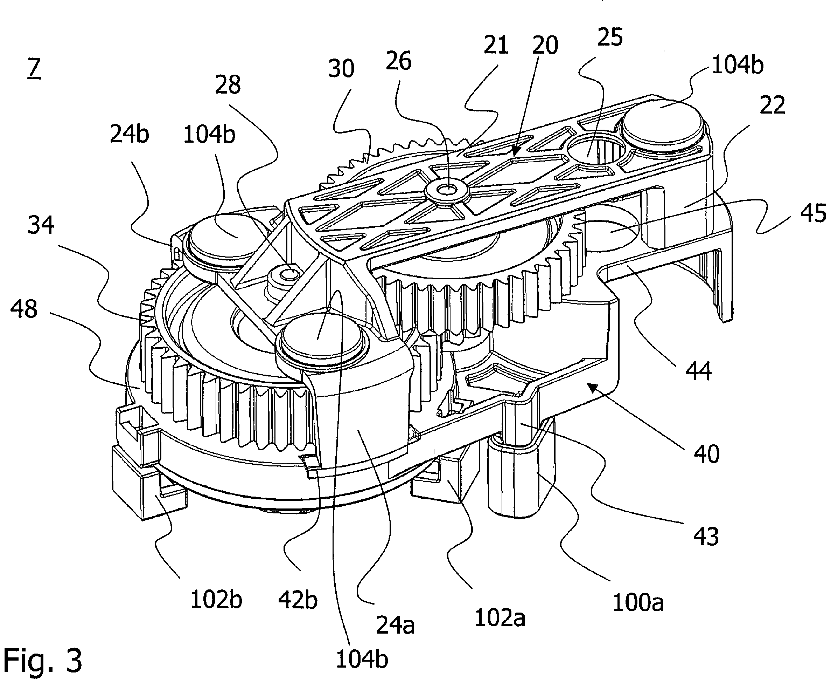

Fig. 3 zeigt eine perspektivische Darstellung der montierten Getriebeeinrichtung 7. Anhand von Fig. 3 wird die Anordnung der Getriebeeinrichtung 7 bezüglich des Fixierelements 40 und eines Zentrierelements 20 ersichtlich.

Das Zentrierelement 20 weist einen plattenförmigen Grundkörper 21 auf, an dessen einem Ende unterseitig ein mechanischer Steckverbinder 22 und an dessen anderem Ende unterseitig zwei weitere, voneinander beabstandete mechanische Steckverbinder 24a-b angeformt sind. Die Streckverbinder 22, 24a-b sind armförmig ausgebildet und erstrecken sich ausgehend von der Unterseite des Zentrierelements 20 senkrecht nach unten. Ferner sind am Zentrierelement 20 zwei zueinander beabstandete Lager 26, 28 zur oberseitigen Aufnahme einer ersten und zweiten Getriebeachse 46, 52 sowie eine kreisförmiges Öffnung 25, in welche die Antriebswelle 11 der Antriebseinrichtung 10 berührungslos hineinragt, ausgebildet.

Das Fixierelement 40 ist ebenso plattenförmig ausgebildet und weist an seiner Oberseite drei mechanische Steckverbinder 42a-c auf, wobei die räumliche Anordnung der Steckverbinder 42a-c jener der Steckverbinder 22, 24a-b des Zentrierelements 20 entspricht. Durch die mechanischen Steckverbinder 22, 24a-b, 42a-c ist das Zentrierelement 20 mit dem Fixierelement 40 über eine Presspassung verbunden, wobei über die Länge der armförmigen Steckverbinder 22, 24a,b ein vertikaler Abstand zwischen der Oberseite des Fixierelements 40 und der Unterseite des Zentrierelements 20 definiert wird. Auf diese Weise bildet das mit dem Fixierelement 40 mechanisch verbundene Zentrierelement 20 einen käfigartigen Aufnahmeraum, welcher für die Aufnahme und stabile Lagerung von Getriebekomponenten vorgesehen ist.

An der Unterseite des Fixierelements 40 sind zwei Trägerelemente 43 (in Fig. 3 ist nur ein Trägerelement aufgrund der perspektivischen Darstellung sichtbar) seitlich angeformt, welche sich senkrecht nach unten erstrecken und mit den Dämpfungselementen 100a-b ummantelt sind. Die mit den Dämpfungselementen 100a-b umgebenen Trägerelemente 3 sind dafür vorgesehen, die zwischen Fixierelement 40 und Zentrierelement 20 aufgebaute Getriebeeinrichtung 7 im Gehäuse 2 des Bremsaktuators 1 dämpfend zu lagern.

Ferner ist das Fixierelement 40 dazu ausgebildet, die räumliche Position der Antriebseinrichtung 10 bezüglich der Getriebeeinrichtung 7 zu definieren. Hierfür ist am zweiten Ende des Fixierelements 40 unterseitig ein zylinderförmiger Aufnahmeraum 44 ausgebildet, in welchem die Antriebseinrichtung 10 eingesetzt ist (Fig. 1). Durch eine kreisförmige Öffnung 45 im Trägerelement 40 ist eine Antriebswelle 11 der Antriebseinrichtung 10 mit einem daran aufgesteckten Zahnrad 18 durchführbar, so dass ein antriebsseitiges Zahnrad 18 im Aufnahmeraum zwischen Zentrierelement 20 und Fixierelement 40 angeordnet ist und mit einem abtriebsseitigen Zahnrad 30 der ersten Getriebestufe 12 in Eingriff steht.

In einer alternativen Ausführung ist das Fixierelement 40 zusätzlich mit einer Befestigungseinrichtung für die Antriebseinrichtung 10 ausgestattet. In diesem Fall ist die Antriebseinrichtung 10 am Fixierelement 40 fest montierbar, so dass mittels des Fixierelements 40 die Antriebseinrichtung 10 und die Getriebeeinrichtung 7 zu einer eigenständig handhabbaren Unterbaugruppe 6 zusammengefasst sind.

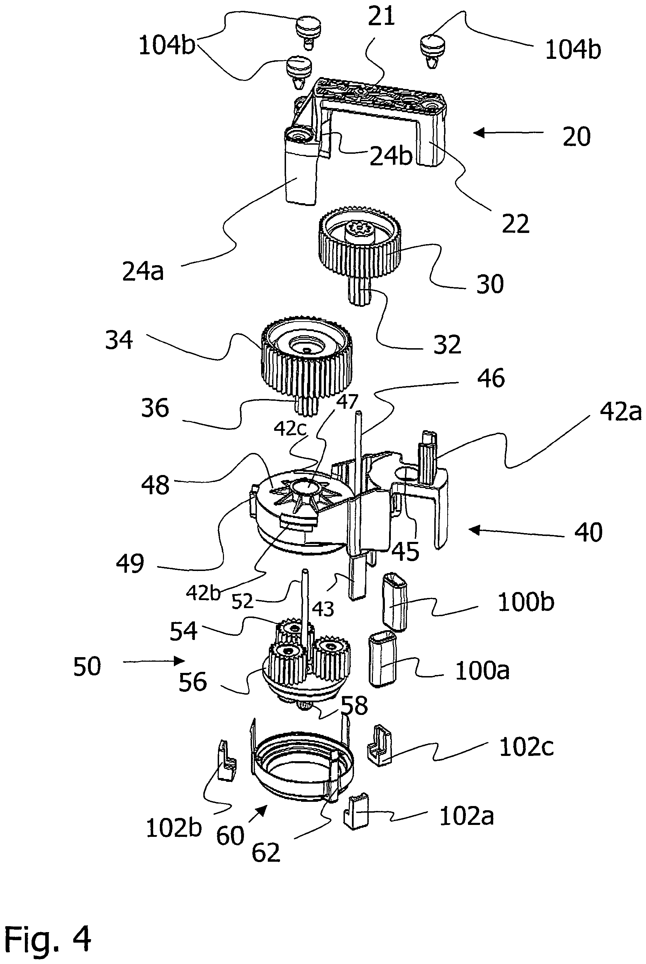

Anhand der Fign. 2 und 4 wird nun der Aufbau der Getriebeeinrichtung 7 näher beschrieben. Fig. 4 veranschaulicht in Form einer Explosionsdarstellung die einzelnen Bauteile der Getriebeeinrichtung 7, welche drei Getriebestufen 12, 14, 16 umfasst. Fig. 2 zeigt eine Schnittansicht des elektromechanischen Bremsaktuators 1.

Die erste Getriebestufe 12 ist als Zahnradgetriebe ausgebildet, wobei das antriebsseitiges Zahnrad 18 (Fig. 2) mit der Antriebswelle 11 der Antriebseinrichtung 10 drehmomentschlüssig verbunden ist. Das antriebsseitige Zahnrad 18 steht in kämmendem Eingriff mit einem abtriebsseitigen Zahnrad 30 der ersten Getriebestufe 12. Das abtriebsseitige Zahnrad 30 der ersten Getriebestufe 12 ist mit einem antriebsseitigem Zahnrad 32 der zweiten Getriebestufe 14 drehfest verbunden. Die zweite Getriebestufe 14 umfasst ebenso ein Zahnradgetriebe, welches zwei Zahnräder 32, 34 umfasst. Das antriebsseitige Zahnrad 32 der zweiten Getriebestufe 14 kämmt seinerseits mit einem abtriebsseitigen Zahnrad 34 der zweiten Getriebestufe 14. Am abtriebsseitigen Zahnrad 34 der zweiten Getriebestufe 14 ist unterseitig ein Sonnenrad 36 der dritten Getriebestufe 16 konzentrisch zu und drehfest mit dem abtriebsseitigen Zahnrad 34 ausgebildet. Das Sonnenrad 36 ist Teil des Planetengetriebes, welches die dritte Getriebestufe 16 der Getriebeeinrichtung 7 bildet.

Die erste und zweite Getriebestufe 12, 14 umfassen jeweils zwei in Eingriff stehende außenverzahnte Zahnräder, wobei jeweils das abtriebsseitige Zahnrad 32, 36 im Vergleich zum jeweiligen antriebsseitigen Zahnrad 30, 34 einen größeren Durchmesser und eine höhere Zahnzahl aufweisen. Auf diese Weise wird eine starke Untersetzung der an der Antriebseinrichtung erzeugten Rotationsbewegung erreicht.

Das abtriebsseitige Zahnrad 30 der ersten Getriebestufe 12 weist eine durchgehende axiale Bohrung auf, in die das antriebsseitige Zahnrad 32 der zweiten Getriebestufe 14 drehfest eingesetzt ist. Das antriebsseitige Zahnrad 32 der zweiten Getriebestufe 14 weist ferner eine axiale Bohrung zur Durchführung der zweiten Getriebeachse 46 auf (Fig. 2). In gleicher Weise sind das abtriebsseitige Zahnrad 34 der zweiten Getriebestufe 14 und das damit drehfest verbundene Sonnenrad 36 ausgebildet. Das Sonnenrad 36 weist ebenso eine axiale Bohrung zur Aufnahme der ersten Getriebeachse 52 auf.

Das Planetengetriebe der dritten Getriebestufe 16 ist einstufig ausgebildet und den beiden Zahnradgetriebestufen 12, 14 nachgeschaltet. Es umfasst einen Planetenradträger 56 mit der daran angebrachten ersten Getriebeachse 52, drei formgleiche Planetenräder 54, ein Hohlrad 48 und das Sonnenrad 36. Der Planetenradträger 56 ist scheibenförmig ausgebildet. An seiner Oberseite sind die drei formgleichen Planetenräder 54 über stiftförmige Lagerelemente 70 (Fig. 2) jeweils drehbar gelagert. Die stiftförmigen Lagerelemente 70 sind am scheibenförmigen Planetenradträgers 56 parallel zur Drehachse angeordnet.

Im Zentrum des Planetenradträgers 56 ist die erste Getriebeachse 52 am Planetenradträger 56 drehfest montiert. Die erste Getriebeachse 52 steht senkrecht zur Oberseite des Planetenradträgers 56 und erstreckt sich mit ihrer Längsachse entlang der Drehachse des Planetenradträgers 56. Es ist auch denkbar, dass die erste Getriebeachse 52 mit dem Planetenradträger 56 als einstückiges Bauteil ausgebildet ist. Der Vorteil einer solchen Ausführung liegt darin, dass eine Befestigung der ersten Getriebeachse 52 am Planetenradträger 56 entfällt.

Die am Planetenradträger 56 drehfest montierte erste Getriebeachse 52 ist dafür vorgesehen, das Sonnenrad 36 und das damit drehfest verbundene abtriebsseitige Zahnrad 34 der zweiten Getriebestufe 14 am Planetenradträger 56 lagernd aufzunehmen. Somit sind die Planetenräder 54 und das Sonnenrad 36 am Planetenradträger 56 gemeinsam lagerbar, wodurch ein Spielausgleich zwischen dem Sonnenrad 36 und den Planetenrädern 54 überflüssig wird und dadurch Lebensdauer und Wirkungsgrad des Planetengetriebes erhöht werden.

An der Unterseite des Planetenradträgers 56 ist ein Abtriebselement 58 formschlüssig angebracht. Das Abtriebselement 58 ist zapfenförmig ausgebildet und konzentrisch zum Planetenradträger 56 angeordnet. Im vorliegenden Ausführungsbeispiel ist das Abtriebselement 58 in einer zylinderförmigen Bohrung entlang der Drehachse des Planetenradträgers 56 unterseitig aufgenommen. In einer alternativen Ausführung können das Abtriebselement 58, der Planetenradträger 56 und die erste Getriebeachse 52 einstückig ausgebildet sein.

Die Anordnung und Lagerung der drei Getriebestufen 12, 14, 16 erfolgt mit Hilfe der Zentrier-, Fixier- und Halteelemente 20, 40, 60. Das Halteelement 60 ist ringförmig mit an dessen Außenseite axial angeformten Befestigungselementen 62 ausgebildet. Das Halteelement 60 ist derart geformt, dass der Planetenradträger 56 passgenau in das Halteelement 60 einsetzbar ist. Das Halteelement 60 wird über die Befestigungselemente 62 außenseitig am Hohlrad 48 rastend befestigt.

Das Hohlrad 48 ist an einem zweiten Ende des Fixierelements 40 ausgeformt. Das Hohlrad 48 ist als innenverzahnter Zahnradring ausgebildet, wobei die Oberseite des Hohlrads 48 scheibenförmig abgedeckt ist und eine zylinderförmige Öffnung für die Durchführung der ersten Getriebeachse 52 und des Sonnenrads 36 aufweist. Das Hohlrad 48 bildet somit einen Teil des Fixierelements 40. Im vorliegenden Ausführungsbeispiel ist das Fixierelement 40 in zwei Teile unterteilt, nämlich in ein Hohlrad 48 am zweiten Ende und in einen zylinderförmig definierten Aufnahmeraum 44 am ersten Ende. Zwischen dem zylinderförmigen Aufnahmeraum 44 und dem Hohlrad 48 ist am Fixierelement 40 oberseitig die zweite Getriebeachse 46 ausgebildet. Die zweite Getriebeachse 46 ist an ihrem zweiten Ende mit dem Fixierelement 40 drehfest verbunden oder darin drehbar gelagert. Die zweite Getriebeachse 46 kann mit dem Fixierelement 40 einstückig ausgebildet sein.

Die Montage der Getriebeeinrichtung 7 am Fixierelement 40 und Zentrierelement 20 beginnt mit dem Einsetzen des Planetenradträgers 56 und den darauf drehbar aufliegenden Planetenrädern 54 in das Hohlrad 48. Dabei werden die Planetenräder 54 unterseitig in das Hohlrad 48 eingesetzt. Der Planetenradträger 56 mit den Planetenrädern 54 wird mit dem Halteelement 60 gegen ein Herausfallen am Hohlrad 48 gesichert. Die am Planetenradträger 56 drehfest gelagerte erste Getriebeachse 52 ragt durch die kreisförmige Öffnung der oberseitigen scheibenförmigen Abdeckung des Hohlrads 48 heraus. Auf die erste Getriebeachse 52 wird anschließend das Sonnenrad 36 und das mit dem Sonnenrad 36 in Verbindung stehende abtriebsseitige Zahnrad 34 der zweiten Getriebestufe 14 aufgesetzt. Das Sonnenrad 36 wird durch die kreisförmige Öffnung in das Hohlrads 48 eingeführt bis es am Planetenradträger 56 aufliegt und mit den Planetenrädern 54 im Eingriff steht. Das Sonnenrad 36 und das damit verbundene Zahnrad 34 sind über die erste Getriebeachse 52 drehbar an der Oberseite des Planetenradträgers 56 gelagert.

Im Anschluss daran wird das antriebsseitige Zahnrad 32 der zweiten Getriebestufe 14 und das damit verbundene abtriebsseitige Zahnrad 30 der ersten Getriebestufe 12 auf die zweite Getriebeachse 46 aufgesetzt, wodurch beide Zahnräder am Fixierelement 40 drehbar gelagert sind und das Zahnrad 32 mit dem Zahnrad 34 im Eingriff steht. Darauf wird das Zentrierelement 20 am Fixierelement 40 montiert, wobei die erste Getriebeachse 52 und die zweite Getriebeachse 46 jeweils mit ihrem ersten Ende in die entsprechenden Lager 26, 28 am Zentrierelement 20 eingesetzt werden. Schließlich wird das antriebsseitige Zahnrad 18 der ersten Getriebestufe 12 zusammen mit der Antriebseinrichtung 10 in die Getriebeeinrichtung 7 eingesetzt.

Die im vorliegenden Ausführungsbeispiel beschriebene Getriebeeinrichtung 7 zeichnet sich nicht nur durch eine einfache Montage aus, sondern auch durch eine robuste Lagerung der Getriebekomponente innerhalb der Getriebeeinrichtung 7. Die beiden Getriebeachsen 46, 52 sind jeweils beidseitig befestigt bzw. drehbar gelagert, wobei die erste Getriebeachse 52 an ihrem ersten Ende am Zentrierelement 20 und an ihrem zweiten Ende am Planetenradträger 56 und die zweite Getriebeachse 46 an ihrem ersten Ende am Zentrierelement 20 und an ihrem zweiten Ende am Fixierelement 40 gelagert ist. Auf diese Weise liegen in der Getriebeeinrichtung 7 keine "fliegenden Lagerachsen" vor, wodurch die Robustheit der Getriebeeinrichtung 7 steigt.

Die räumliche Position der ersten Getriebeachse 46 wird über die im Hohlrad 48 geführten Planetenräder 54 eindeutig bestimmt. Mit anderen Worten zentriert sich die erste Getriebeachse 52 bezüglich des Hohlrads 48 über die am Planetenradträger 56 drehbar aufliegenden Planetenräder 54. Die über das Hohlrad 48 zentrierte erste Getriebeachse 52 kann somit als Ausgangspunkt für eine toleranzgerechte Positionierung der zweiten Getriebeachse 46 sowie der Antriebseinrichtung 10 am Fixierelement 40 herangezogen werden.

Anhand der in Fig. 2 dargestellten Schnittansicht wird schließlich die geometrische Anordnung der Unterbaugruppe 6 verdeutlicht. Durch die stufenförmige Ausbildung des Fixierelements 40 sind die erste Getriebestufe 12 und die zweite Getriebestufe 14 in axialer Richtung zueinander versetzt angeordnet, wobei die jeweils im Durchmesser größeren abtriebsseitigen Zahnräder 30, 34 sich in radialer Richtung überlappen. Ferner ist die Antriebseinrichtung 10 bezüglich der Getriebeeinrichtung 7 in axialer Richtung versetzt angeordnet, so dass eine besonders kompakte Unterbaugruppe 6 mit hohem Untersetzungsverhältnis entsteht.

## Patentansprüche

1. Unterbaugruppe (6) für einen elektromechanischen Bremsaktuator (1), umfassend:
- eine Antriebseinrichtung (10) zur Erzeugung eines Drehmoments;
- eine Getriebeeinrichtung (7), welche hintereinander eine erste (12), eine zweite (14) und eine dritte (16) Getriebestufe zur Übertragung des Drehmoments umfasst, wobei die zweite Getriebestufe (14) als Zahnradgetriebe und die dritte Getriebestufe (16) als Planetengetriebe ausgebildet ist und wobei ein Planetenradträger (56) der dritten Getriebestufe (16) eine erste Getriebeachse (52) zur drehbaren Aufnahme eines Sonnenrads (36) der dritten Getriebestufe (16) und eines mit dem Sonnenrad (36) drehfest gekoppelten abtriebsseitigen Zahnrads (34) der zweiten Getriebestufe (14) am Planetenradträger (56), sowie Lagerelemente (70) für Planetenräder (54) der dritten Getriebestufe (16) aufnimmt.

2. Unterbaugruppe (6) nach Anspruch 1, wobei die erste Getriebestufe (12) als Zahnradgetriebe oder Riemengetriebe ausgebildet ist,
wobei vorzugsweise ein antriebsseitiges Zahnrad (32) der zweiten Getriebestufe (14) mit einem abtriebsseitigen Zahnrad (30) oder Riemenrad der ersten Getriebestufe (12) drehfest gekoppelt ist.

3. Unterbaugruppe (6) nach einem der vorhergehenden Ansprüche, wobei das Sonnenrad (36) der dritten Getriebestufe (16) und das abtriebsseitige Zahnrad (34) der zweiten Getriebestufe (14) einstückig ausgebildet sind.

4. Unterbaugruppe (6) nach einem der vorhergehenden Ansprüche, wobei die erste Getriebeachse (52) am Planetenradträger (56) drehfest angeordnet ist.

5. Unterbaugruppe (6) nach einem der vorhergehenden Ansprüche, wobei die erste Getriebeachse (52) mittig am Planetenradträger (56) vorgesehen ist.

6. Unterbaugruppe (6) nach einem der vorhergehenden Ansprüche, wobei der Planetenradträger (56) an einer seinen Planetenrädern (54) gegenüberliegenden Seite ein drehmomentschlüssig am Planetenradträger (56) angebrachtes Abtriebselement (58) zur Abgabe des Drehmoments aufweist.

7. Unterbaugruppe (6) nach einem der vorhergehenden Ansprüche, ferner umfassend ein Fixierelement (40), welches dafür vorgesehen ist, die Getriebeeinrichtung (7) relativ zur Antriebseinrichtung (10) räumlich anzuordnen,
wobei optional die erste Getriebeachse (52) am Fixierelement (40) gelagert ist.

8. Unterbaugruppe (6) nach Anspruch 7, wobei am Fixierelement (40) ein Hohlrad (48) zur Aufnahme der Planetenräder (54) ausgebildet ist, wobei optional der Planetenradträger (56) der dritten Getriebestufe (16) über ein Halteelement (60) am Hohlrad (48) gelagert ist.

9. Unterbaugruppe (6) nach einem der Anspruch 7 oder 8, wobei das Fixierelement (40) stufenförmig ausgebildet ist.

10. Unterbaugruppe (6) nach einem der Ansprüche 7 bis 9, wobei am Fixierelement (40) eine zweite Getriebeachse (46) lagernd aufgenommen ist.

11. Unterbaugruppe (6) nach einem der Ansprüche 7 bis 10, ferner umfassend ein Zentrierelement (20), welches zusammen mit dem Fixierelement (40) einen käfigartigen Aufnahmeraum für die Getriebeeinrichtung (7) bildet.

12. Unterbaugruppe (6) nach den Ansprüchen 10 und 11, wobei die zweite Getriebeachse (46) an ihrem ersten Ende am Fixierelement (40) und an ihrem zweiten Ende am Zentrierelement (20) gelagert ist.

13. Unterbaugruppe (6) nach Anspruch 12 in Kombination mit Anspruch 2, wobei das antriebsseitige Zahnrad (32) der zweiten Getriebestufe (14) und das abtriebsseitige Zahnrad der ersten Getriebestufe (30) über die zweite Getriebeachse (46) im käfigartigen Aufnahmeraum zwischen dem Fixierelement (40) und dem Zentrierelement (20) aufgenommen sind.

14. Elektromechanischer Bremsaktuator (1), umfassend eine Unterbaugruppe (6) nach einem der vorhergehenden Ansprüche, ein Gehäuse und mindestens zwei Dämpfungselemente (100a-b, 102a-c, 104a-b), wobei die mindestens zwei Dämpfungselemente (100a-b, 102a-c, 104a-b) zwischen der Unterbaugruppe (6) und dem Gehäuse zur dämpfenden Lagerung der Unterbaugruppe (6) im Gehäuse angeordnet sind.

15. Elektrische Parkbremse, umfassend eine Unterbaugruppe (6) nach einem der Ansprüche 1 bis 13 oder einen elektromechanischen Bremsaktuator (1) nach Anspruch 14 und einen dem Bremsaktuator (1) nachgeschalteten Rotations-Translations-Umsetzer zur Umwandelung der vom Bremsaktuator (1) erzeugten Rotationsbewegung in eine Linearbewegung.

## Claims

1. Subassembly (6) for an electromechanical brake actuator (1), comprising:
- a drive device (10) for generating a torque;
- a gearing device (7) which comprises, in succession, a first (12), a second (14) and a third (16) gearing stage for transmitting the torque, the second gearing stage (14) taking the form of a toothed-wheel gearing, and the third gearing stage (16) taking the form of a planetary gearing, and a planet carrier (56) of the third gearing stage (16) receiving a first gearing shaft (52) for rotatably receiving a sun gear (36) of the third gearing stage (16) and an output-side gearwheel (34), coupled in torsionally resistant manner with the sun gear (36), of the second gearing stage (14) on the planet carrier (56), and also bearing elements (70) for planet gears (54) of the third gearing stage (16).

2. Subassembly (6) according to Claim 1, wherein the first gearing stage (12) takes the form of a toothed-wheel gearing or belt gearing,
wherein preferably a drive-side gearwheel (32) of the second gearing stage (14) has been coupled in torsionally resistant manner with an output-side gearwheel (30) or belt pulley of the first gearing stage (12).

3. Subassembly (6) according to one of the preceding claims, wherein the sun gear (36) of the third gearing stage (16) and the output-side gearwheel (34) of the second gearing stage (14) have been integrally formed.

4. Subassembly (6) according to one of the preceding claims, wherein the first gearing shaft (52) has been arranged in torsionally resistant manner on the planet carrier (56).

5. Subassembly (6) according to one of the preceding claims, wherein the first gearing shaft (52) has been provided centrally on the planet carrier (56).

6. Subassembly (6) according to one of the preceding claims, wherein the planet carrier (56) exhibits, on a side situated opposite its planet gears (54), an output element (58), fitted to the planet carrier (56) in torque-transmitting manner, for delivering the torque.

7. Subassembly (6) according to one of the preceding claims, further including a fixing element (40) which has been provided for arranging the gearing device (7) spatially relative to the drive device (10),
wherein optionally the first gearing shaft (52) has been supported on the fixing element (40).

8. Subassembly (6) according to Claim 7, wherein a ring gear (48) for receiving the planet gears (54) has been formed on the fixing element (40), wherein optionally the planet carrier (56) of the third gearing stage (16) has been supported on the ring gear (48) via a holding element (60).

9. Subassembly (6) according to one of Claims 7 or 8, wherein the fixing element (40) is stepped.

10. Subassembly (6) according to one of Claims 7 to 9, wherein a second gearing shaft (46) has been received in supporting manner on the fixing element (40).

11. Subassembly (6) according to one of Claims 7 to 10, further including a centring element (20) which, together with the fixing element (40), forms a cage-like receiving space for the gearing device (7).

12. Subassembly (6) according to Claims 10 and 11, wherein the second gearing shaft (46) has been supported at its first end on the fixing element (40), and at its second end on the centring element (20).

13. Subassembly (6) according to Claim 12 in combination with Claim 2, wherein the drive-side gearwheel (32) of the second gearing stage (14) and the output-side gearwheel of the first gearing stage (30) have been received via the second gearing shaft (46) in the cage-like receiving space between the fixing element (40) and the centring element (20).

14. Electromechanical brake actuator (1), comprising a subassembly (6) according to one of the preceding claims, a housing and at least two cushioning elements (100a-b, 102a-c, 104a-b), wherein the at least two cushioning elements (100a-b, 102a-c, 104a-b) have been arranged between the subassembly (6) and the housing for the purpose of cushioning support of the subassembly (6) in the housing.

15. Electric parking brake, including a subassembly (6) according to one of Claims 1 to 13 or an electromechanical brake actuator (1) according to Claim 14 and a rotation/translation converter connected downstream of the brake actuator (1) for transforming the rotational motion generated by the brake actuator (1) into a linear motion.

## Revendications

1. Sous-ensemble (6) pour un actionneur de frein électromécanique (1), comprenant :
- un dispositif d'entraînement (10) destiné à générer un couple ;
- un dispositif de transmission (7) qui comprend, disposés les uns après les autres, un premier (12), un deuxième (14) et un troisième (16) étage de transmission pour la transmission du couple, le deuxième étage de transmission (14) étant réalisé sous forme de transmission par engrenage et le troisième étage de transmission (16) sous forme de transmission planétaire et un support de roue planétaire (56) du troisième étage de transmission (16) recevant un premier axe de transmission (52) destiné à recevoir de manière rotative une roue solaire (36) du troisième étage de transmission (16) et une roue dentée (34) côté sortie accouplée fixe en rotation à la roue solaire (36) du deuxième étage de transmission (14) sur le support de roue planétaire (56), ainsi que des éléments de logement (70) pour roues planétaires (54) du troisième étage de transmission (16).

2. Sous-ensemble (6) selon la revendication 1, le premier étage de transmission (12) étant réalisé sous forme de transmission par engrenage ou à courroie, une roue dentée (32) côté entraînement du deuxième étage de transmission (14) étant préférentiellement accouplée fixe en rotation à une roue dentée (30) côté sortie ou à une poulie à courroie du premier étage de transmission (12).

3. Sous-ensemble (6) selon l'une des revendications précédentes, la roue solaire (36) du troisième étage de transmission (16) et la roue dentée (34) côté sortie du deuxième étage de transmission (14) étant réalisées d'un seul tenant.

4. Sous-ensemble (6) selon l'une des revendications précédentes, le premier axe de transmission (52) étant disposé fixe en rotation sur le support de roue planétaire (56).

5. Sous-ensemble (6) selon l'une des revendications précédentes, le premier axe de transmission (52) étant prévu au centre sur le support de roue planétaire (56).

6. Sous-ensemble (6) selon l'une des revendications précédentes, le support de roue planétaire (56) présentant sur un côté opposé à ses roues planétaires (54) un élément de sortie (58) monté sur le support de roue planétaire (56) et relié à celui-ci par couple de transmission afin de transférer le couple.

7. Sous-ensemble (6) selon l'une des revendications précédentes, comprenant en outre un élément de fixation (40) lequel est prévu pour permettre la disposition dans l'espace du dispositif de transmission (7) par rapport au dispositif d'entraînement (10), le premier axe de transmission (32) étant optionnellement monté sur l'élément de fixation (40).

8. Sous-ensemble (6) selon la revendication 7, une couronne (48) étant conçue sur l'élément de fixation (40) pour recevoir les roues planétaires (54), le support de roue planétaire (56) du troisième étage de transmission (16) étant optionnellement monté par l'intermédiaire d'un élément de maintien (60) sur la couronne (48).

9. Sous-ensemble (6) selon la revendication 7 ou 8, l'élément de fixation (40) étant conçu en gradins.

10. Sous-ensemble (6) selon l'une des revendications 7 à 9, un deuxième axe de transmission (46) étant monté sur l'élément de fixation (40).

11. Sous-ensemble (6) selon l'une des revendications 7 à 10, comprenant en outre un élément de centrage (20) lequel forme avec l'élément de fixation (40) un espace de logement en forme de cage pour le dispositif de transmission (7).

12. Sous-ensemble (6) selon les revendications 10 et 11, le deuxième axe de transmission (46) étant monté, à sa première extrémité, sur l'élément de fixation (40) et à sa deuxième extrémité, sur l'élément de centrage (20).

13. Sous-ensemble (6) selon la revendication 12 en combinaison avec la revendication 2, la roue dentée (32) côté entraînement du deuxième étage de transmission (14) et la roue dentée côté sortie du premier étage de transmission (30) étant montées par l'intermédiaire du deuxième axe de transmission (46) à l'intérieur d'un espace de logement en forme de cage entre l'élément de fixation (40) et l'élément de centrage (20).

14. Actionneur de frein (1) électromécanique, comprenant un sous-ensemble (6) selon l'une des revendications précédentes, un boîtier et au moins deux éléments amortisseurs (100a-b, 102a-c, 104a-b), lesdits au moins deux éléments amortisseurs (100a-b, 102a-c, 104a-b) étant disposés entre le sous-ensemble (6) et le boîtier en vue du montage anti-vibrations du sous-ensemble (6) à l'intérieur du boîtier.

15. Frein de stationnement électrique comprenant un sous-ensemble (6) selon l'une des revendications 1 à 13 ou un actionneur de frein électromécanique (1) selon la revendication 14 et un convertisseur de mouvement monté en aval de l'actionneur de frein (1) et permettant la transformation du mouvement circulaire produit par l'actionneur de frein (1) en un mouvement linéaire.
